# EUROPEAN PATENT SPECIFICATION

(11) **EP 3 597 885 B1**
(45) Date of publication and mention of the grant of the patent: **20.04.2022**
(21) Application number: 19193921.4
(22) Date of filing: 19.07.2017
(51) Int. Cl.: F02C 3/107, F02C 3/14, F02C 6/20, F02C 7/32, F02C 7/06

(54) **GEAR TRAIN ARCHITECTURE FOR A MULTI-SPOOL GAS TURBINE ENGINE**
ZAHNRADGETRIEBEARCHITEKTUR FÜR EINEN GASTURBINENMOTOR MIT MEHREREN SPULEN
ARCHITECTURE D'ENGRENAGE POUR MOTEUR À TURBINE À GAZ MULTI-CORPS

(30) Priority: 19.07.2016 US 201662363955 P; 19.07.2016 US 201662363956 P; 19.07.2016 US 201662363952 P; 19.07.2016 US 201662363949 P; 19.07.2016 US 201662363947 P; 20.12.2016 US 201615384959; 17.01.2017 US 201715407423; 17.01.2017 US 201715407414; 17.01.2017 US 201715407445; 17.01.2017 US 201715407439
(43) Date of publication of application: 22.01.2020
(62) Divisional of application: 17182094.7
(73) Proprietor: Pratt & Whitney Canada Corp., Longueuil, Québec J4G 1A1 (CA)
(72) Inventor: LEFEBVRE, Guy, Longueuil, Québec J4G 1A1 (CA)
(74) Representative: Dehns

(56) References cited:
- EP-A2- 2 295 763
- EP-A2- 2 728 140
- WO-A1-2005/061873
- WO-A2-2015/122948

## Description

### TECHNICAL FIELD

The application relates to gas turbine engines and, more particularly, to a gear train architecture for a multi-spool engine.

### BACKGROUND OF THE ART

Multi-spool gas turbine engines typically have a tower shaft for providing a drive input to an accessory gear box (AGB) asymmetrically mounted on a side of the engine. Such engine architecture may contribute to an increase in diameter of the engine envelope. Also, the extension of the tower shaft through the gaspath may impact the engine's aerodynamic performance.

There is, thus, a need for new engine architecture.

EP 2 728 140 A2 discloses a prior art booster assembly for a gas turbine engine comprising a gearing.

WO 2005/061873 A1 discloses a prior art gas turbine engine architecture.

EP2 295 763 A2 discloses a prior art reversed flow core for a turbofan with a fan drive gear system.

### SUMMARY

In an aspect of the present disclosure, there is provided a reverse flow gas turbine engine as recited in claim 1.

Features of embodiments of the invention are set forth in the dependent claims.

### DESCRIPTION OF THE DRAWINGS

Reference is now made to the accompanying figures in which:
Fig. 1 is a schematic cross-sectional view of a multi-spool gas turbine engine;
Fig. 2 is an enlarged cross-section of the engine shown in Fig. 1 and illustrates first and second gear trains incorporated in the center cavity of the gas generator case between the HP compressor and the LP compressor to respectively interconnect the LP turbine to the LP compressor and the HP spool to an axially mounted accessory gearbox (AGB) driven through the center of the LP compressor;
Fig. 3 is an enlarged cross-section view of the first and second gear trains and illustrates an oil line capacity of the case structure housing the gear trains, the case structure being formed by the compressor inner gaspath wall; and
Fig. 4 is an enlarged cross-section view illustrating how the oil sump of the gear train module between the HP compressor and the LP compressor and that of the AGB are combined to provide a combined oil tank.

### DETAILED DESCRIPTION

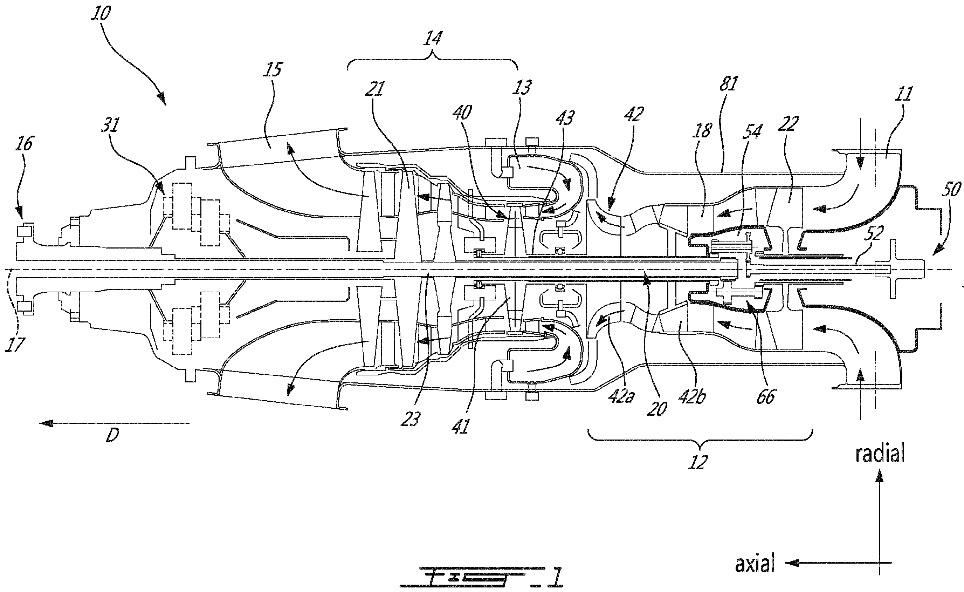

Fig. 1 illustrates a gas turbine engine 10 of a type preferably provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust outlet 15 through which the combustion gases exit the engine 10. The engine 10 further has a drive output shaft 16 having a front end configured to drive a rotatable load (not shown). The rotatable load can, for instance, take the form of a propeller or a rotor, such as a helicopter main rotor. Depending on the intended use, the engine 10 can be configured as a turboprop engine or a turboshaft engine. Fig. 1 illustrates a turboprop configuration. The gas turbine engine 10 has a centerline or longitudinal center axis 17 about which the compressor and turbine rotors rotate.

The gas turbine engine 10 has an axially extending central core which defines a gaspath 18 through which gases flow, as depicted by flow arrows in Fig. 1. The exemplary embodiment shown in Fig. 1 is a "reverse-flow" engine because gases flow through the gaspath 18 from the air inlet 11 at a rear portion thereof, to the exhaust outlet 15 at a front portion thereof. This is in contrast to "through-flow" gas turbine engines in which gases flow through the core of the engine from a front portion to a rear portion. The direction of the flow of gases through the gaspath 18 of the engine 10 disclosed herein can be better appreciated by considering that the gases flow through the gaspath 18 in the same direction D as the one along which an aircraft engine travels during flight. Stated differently, gases flow through the engine 10 from a rear end thereof towards the output shaft 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to output shaft 16 (e.g. closer to the propeller in a turboprop application). Similarly, a component of the engine 10 that is "aft" of another component is arranged within the engine 10 such that it is further away from the output shaft 16.

Still referring to Fig. 1, the engine 10 has multiple spools which perform compression to pressurize the air received through the air inlet 11, and which extract energy from the combustion gases before they exit the gaspath 18 via the exhaust outlet 15. More particularly, the illustrated embodiment comprises a low pressure (LP) spool 20 and a high pressure (HP) spool 40 mounted for rotation about the engine central axis. The LP and HP spools 20, 40 are independently rotatable about the central axis 17. The term "spool" is herein intended to broadly refer to drivingly connected turbine and compressor rotors and is, thus, not limited to a compressor and turbine assembly on a single shaft. As will be seen hereinbelow, it also includes a rotary assembly with multiple shafts geared together.

The LP spool 20 includes at least one component to compress the air that is part of the compressor section 12, and at least one component to extract energy from the combustion gases that is part of the turbine section 14. More particularly, the LP spool 20 has a low pressure turbine 21, also known as a power turbine, which may include different number of stages (three stages in the illustrated embodiment), and which drives an LP compressor 22 (also referred to as a boost). The low pressure turbine 21 drives the low pressure compressor 22, thereby causing the LP compressor 22 to pressurize incoming air from the air inlet 11. The LP compressor 22 is disposed just forward of the air inlet 11. Both the LP turbine 21 and the LP compressor 22 are disposed along the center axis 17. In the depicted embodiment, both the LP turbine 21 and the LP compressor 22 include rotatable components having an axis of rotation that is coaxial with the center axis 17. It is understood that they can each include one or more stages depending upon the desired engine thermodynamic cycle.

The LP turbine 21 is forward of the LP compressor 22. The LP turbine 21 is also aft of the exhaust outlet 15. The LP compressor 22 is forward of the air inlet 11. This arrangement of the LP turbine 21 and the LP compressor 22 provides for a reverse-flow engine 10 that has one or more LP compressor stages located at the rear of the engine 10, and which are driven by one or more low pressure turbine stages located at the front of the engine 10.

The LP spool 20 further comprises an LP shaft 23 (also known as a power shaft) coaxial with the center axis 17 of the engine 10. The LP turbine 21 is drivingly connected to the LP shaft 23. The LP shaft 23 allows the LP turbine 21 to drive the LP compressor 22 during operation of the engine 10. As will be discussed in greater details hereinbelow, the LP shaft 23 may be drivingly connected to the LP compressor 22 via a gear train to allow the LP compressor 22 to run at a different rotational speed from the LP turbine 21. This can provide more flexibility in the selection of design points for the LP compressor 22 while at the same time allowing to drivingly connect an axially mounted accessory gear box (AGB) to the HP spool 40 centrally through the LP compressor 22, thereby minimizing the engine envelope in a direction radial from the engine axis 17.

It is understood that the LP shaft 23 is not limited to the configuration depicted in Fig. 1. For instance, instead of being provided in the form of a one piece through shaft, it could be divided into serially interconnectable sections. Splines or other suitable connections could be provided between adjacent shaft sections to transfer torque from the LP turbine 21.

Still referring to Fig. 1, it can be appreciated that the LP shaft 23 also extends axially forwardly from the LP turbine 21 for driving the output shaft 16. The LP shaft 23 is drivingly connected to the output shaft 16 via a suitable reduction gear box (RGB) 31. A rotatable load, a propeller (not shown) according to the illustrated example, is connectable to a front end of the output shaft 16. In this way, the LP turbine 21 can be used to drive the rotatable load (e.g. the propeller) at a reduced speed relative to the speed of the LP turbine 21. In such a configuration, during operation of the engine 10, the LP turbine 21 drives the rotatable load such that a rotational drive produced by the LP turbine 21 is transferred to the rotatable load via the LP shaft 23, the RGB 31 and the output shaft 16 coming out forwardly from the RGB 31. The rotatable load can therefore be any suitable component, or any combination of suitable components, that is capable of receiving the rotational drive from the LP turbine section 21.

The RGB 31 processes and outputs the rotational drive transferred thereto from the LP turbine 21 via the LP shaft 23 through known gear reduction techniques. The RGB 31 allows for the load (e.g. the propeller according to the illustrated turboprop example) to be driven at its optimal rotational speed, which is different from the rotational speed of the LP turbine 21. The RGB 31 is axially mounted at the front end of the engine. The RGB 31 has an input and an output axis parallel (coaxial in the illustrated embodiment) to the central axis 17 of the engine 10.

In an alternate embodiment where the engine 10 is a turboshaft, the rotational load (which may include, but is not limited to, helicopter main rotor(s) and/or tail rotor(s), propeller(s) for a tilt-rotor aircraft, pump(s), generator(s), gas compressor(s), marine propeller(s), etc.) is driven by the LP turbine 21 via the RGB 31, or the RGB 31 may be omitted such that the output of the engine 10 is provided directly by the LP shaft 23.

The LP shaft 23 with the portions thereof extending forward and aft of the LP turbine 21 provides the engine 10 with bidirectional drive. Modularity criteria for gas turbine engines may require the use of distinct shaft sections in opposed axial directions from the LP turbine 21. The LP shaft sections may be directly or indirectly connected together. Alternately, the LP shaft 23 can be integral with a first segment of the LP shaft extending axially between the LP compressor 22 and the LP turbine 21, and a second segment extending between the rotatable load and the LP turbine 21. Whether the LP shaft 23 is integral or segmented, the LP turbine 21 provides rotational drive outputted at each end of the LP shaft 23.

In light of the preceding, it can be appreciated that the LP turbine 21 drives both the rotatable load and the LP compressor 22. Furthermore, the rotatable load, when mounted to the engine 10, and the LP compressor 22 are disposed on opposite ends of the LP turbine 21. It can thus be appreciated that one or more low pressure turbine stages are used to drive elements in front of the LP turbine (e.g. propeller, RGB 31, etc.) as well as to drive elements to the rear of the LP turbine (e.g. LP compressor 22). This configuration of the LP turbine 21 allows it to simultaneously drive the rotatable load and the LP compressor 22.

Still referring to Fig. 1, the HP spool 40 has at least one component to compress the air that is part of the compressor section 12, and at least one component to extract energy from the combustion gases that is part of the turbine section 14. The HP spool 40 is also disposed along the center axis 17 and includes an HP turbine 41 (also referred to as the compressor turbine) drivingly engaged (e.g. directly connected) to an HP compressor 42 by an HP shaft 43 rotating independently of the LP shaft 23. In the illustrated embodiment, the HP shaft 43 is a hollow shaft which rotates around the LP shaft 23. That is the LP shaft 23 extends axially through the HP shaft 43. Similarly to the LP turbine 21 and the LP compressor 22, the HP turbine 41 and the HP compressor 42 can each include one or more stages of rotors, depending upon the desired engine thermodynamic cycle, for example. In the depicted embodiment, the HP compressor 42 includes a centrifugal compressor 42a or impeller and an axial compressor 42b, both of which are driven by the HP turbine 41. During operation of the engine 10, torque is transferred from HP turbine 41 to the HP compressor 42 via HP shaft 43.

In the illustrated reverse flow engine configuration, the HP turbine 41 is aft of the LP turbine 21, and forward of the combustor 13. The HP compressor 42 is aft of the combustor 13, and forward of the LP compressor 22. From this arrangement of the HP turbine 41 and the HP compressor 42, it can be appreciated that during operation of the engine 10, the LP compressor 22 driven by the LP turbine 21 feeds pressurized air to the HP compressor 42. Therefore, the pressurized air flow produced by the LP compressor 22 is provided to the HP compressor 42 and contributes to the work of both the LP turbine 21 and the HP turbine 41. This arrangement provides for a boosted reverse flow engine.

It can thus be appreciated that the presence of the above-described LP and HP spools 20, 40 provides the engine 10 with a "split compressor" arrangement. More particularly, some of the work required to compress the incoming air is transferred from the HP compressor 42 to the LP compressor 22. In other words, some of the compression work is transferred from the HP turbine 41 to the more efficient LP turbine 21. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature (sometimes referred to as "T4") for a given power. These factors can contribute to a lower overall weight for the engine 10. The transfer of compression work from the HP compressor 42 to the LP compressor 22 contrasts with some conventional reverse-flow engines, in which the high pressure compressor (and thus the high pressure turbine) perform all of the compression work.

In light of the preceding, it can be appreciated that the LP turbine 21 is the "low-speed" and "low pressure" turbine section when compared to the HP turbine 41. The LP turbine 21 is sometimes referred to as the "power turbine". The turbine rotors of the HP turbine 41 spin at a higher rotational speed than the turbine rotors of the LP turbine 21 given the closer proximity of the HP turbine 41 to the outlet of the combustor 13. Consequently, the compressor rotors of the HP compressor 42 may rotate at a higher rotational speed than the compressor rotors of the LP compressor 22.

The HP turbine 41 and the HP compressor 42 can have any suitable mechanical arrangement to achieve the above-described split compressor functionality. For example, and as shown in Fig. 1, the HP shaft 43 extends concentrically about the LP shaft 23 and is independently rotatable relative thereto. The relative rotation between the HP shaft 43 and the LP shaft 23 allow the shafts 23, 43 to rotate at different rotational speeds, thereby allowing the HP compressor 42 and the LP compressor 22 to rotate at different rotational speeds. The HP shaft 43 can be mechanically supported by the LP shaft 23 using bearings or the like.

Still referring to the embodiment shown in Fig. 1, the engine 10 also includes an accessory gearbox (AGB) 50. The AGB 50 receives a rotational input from the HP spool 40 and, in turn, drives accessories (e.g. fuel pump, starter-generator, oil pump, scavenge pump, etc.) that contribute to the functionality of the engine 10. The AGB 50 can be designed with side-facing accessories, top-facing accessories, or rear-facing accessories depending on the installation needs.

According to the illustrated embodiment, the AGB 50 is concentrically mounted axially aft of the LP compressor 22 as an axial extension of the engine envelope. The axial positioning of the AGB 50 allows minimizing the diameter of the envelope of the engine as compared to a split compressor or boosted engine having the AGB mounted on a side of the engine and connected to the HP spool via a tower shaft. In the illustrated embodiment, the AGB is accommodated within the envelope of the engine in a plane normal to the central axis 17.

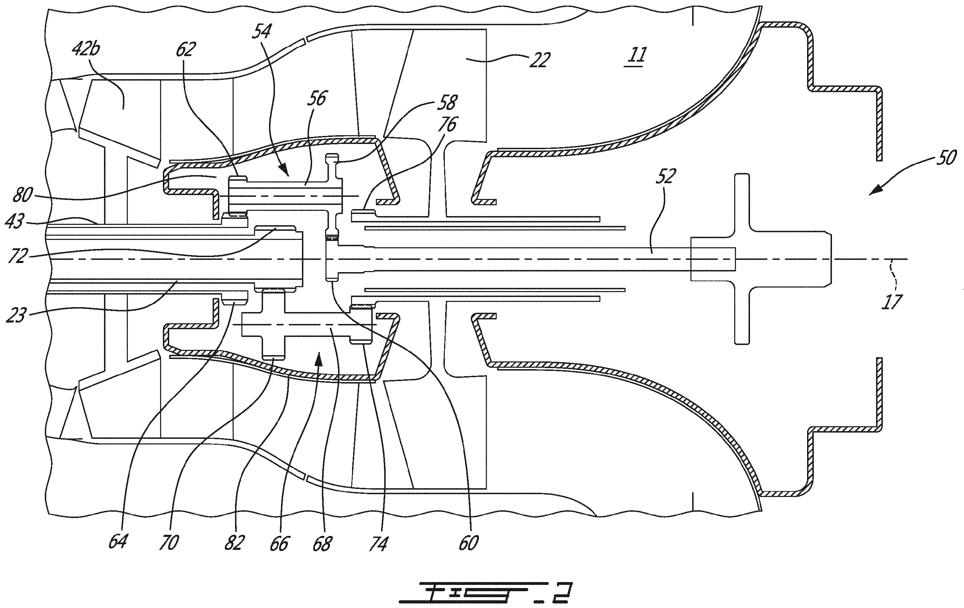

In the illustrated embodiment, the AGB input drive axis is coaxial to the LP compressor centerline and the engine central axis 17. By so aligning the input axis of the AGB 50 relative to the LP compressor centerline, the drive input to the AGB 50 can be provided centrally through the center of the LP compressor 22, thereby eliminating the need for a tower shaft and an externally mounted gear arrangement. However, unlike conventional reverse flow engines (like the well-known PT6 engine manufactured by Pratt & Whitney Canada), which do not include a compressor boost, the presence of the LP compressor 22 axially between the HP compressor 42 and the AGB 50 physically interferes with the connection of the AGB 50 with the HP spool 40. This particular problem is overcome by passing the input drive shaft 52 of the AGB 50 centrally through the LP compressor 22. As best shown in Fig. 2, the AGB input shaft 52 extends along the engine central axis 17 through the central bore of the LP compressor 22. A first gear train 54 is provided for drivingly connecting the AGB input shaft 52 to the HP compressor 42. In the illustrated embodiment, the first gear train 54 comprises a geared shaft 56 having a first gear 58 in meshing engagement with a corresponding gear 60 at a distal end of the AGB drive shaft 52 and a second gear 62 in meshing engagement with a corresponding gear 64 at the rear end of the HP shaft 43 or HP compressor 42. To physically permit this gear drive connection between the AGB input shaft 52 and the HP spool 40 through the center of the LP compressor 22, a discontinuity between the LP shaft 23 and the LP compressor 22 is provided and the LP shaft 23 is drivingly connected to the LP compressor 22 via a second gear train 66. Indeed, if the LP shaft 23 was to extend continuously to the LP compressor 22, the AGB input shaft 52 could not be geared to the geared shaft 56, which is disposed radially outwardly relative to the LP shaft 23.

According to the illustrated embodiment, the second gear train 66 comprises a geared shaft 68 comprising a first gear 70 in meshing engagement with a corresponding gear 72 at the rear end of the LP shaft 23 and a second gear 74 in meshing engagement with a corresponding gear 76 on a hub portion projecting axially forwardly from the LP compressor 22. As mentioned herein above, the gear connection between the LP turbine 21 and the LP compressor 22 is also advantageous in that it allows to drive the LP compressor at a different speed than the LP turbine. It can thus allow for overall thermodynamic cycle performance improvement.

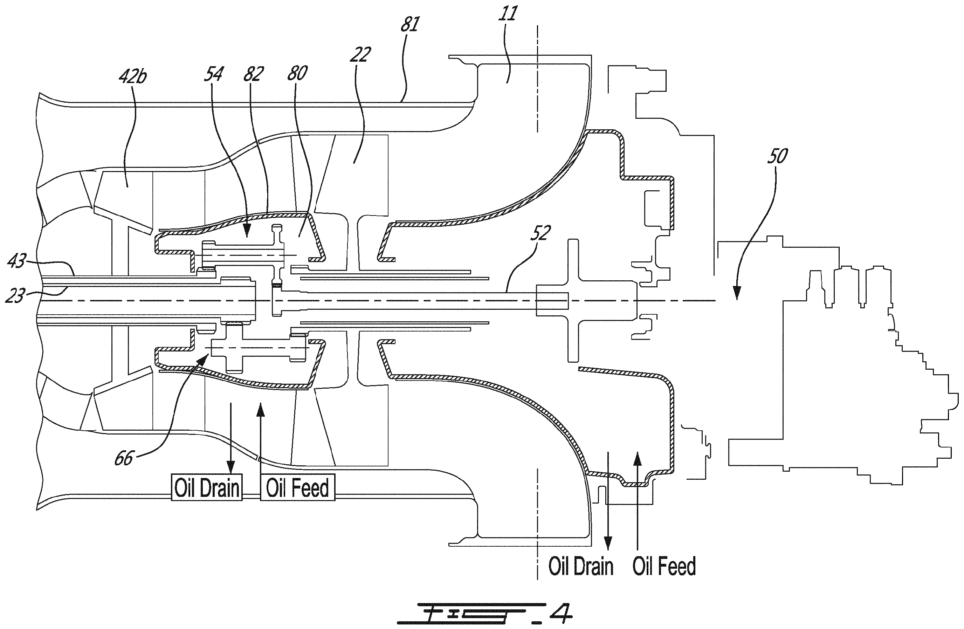

In the illustrated embodiment, the first and second gear trains 54 and 66 are contained in a central chamber or cavity 80 of the gas generator case 81 (Figs. 1 and 4) radially inwardly of the gaspath 18 axially between the HP and LP compressors 42 and 22. The central cavity 80 is circumscribed by the compressor inner gaspath wall 82. This provides for a compact arrangement. The use of the inner gaspath wall 82 to house the gear trains 54, 66 eliminates the need for an additional gear casing.

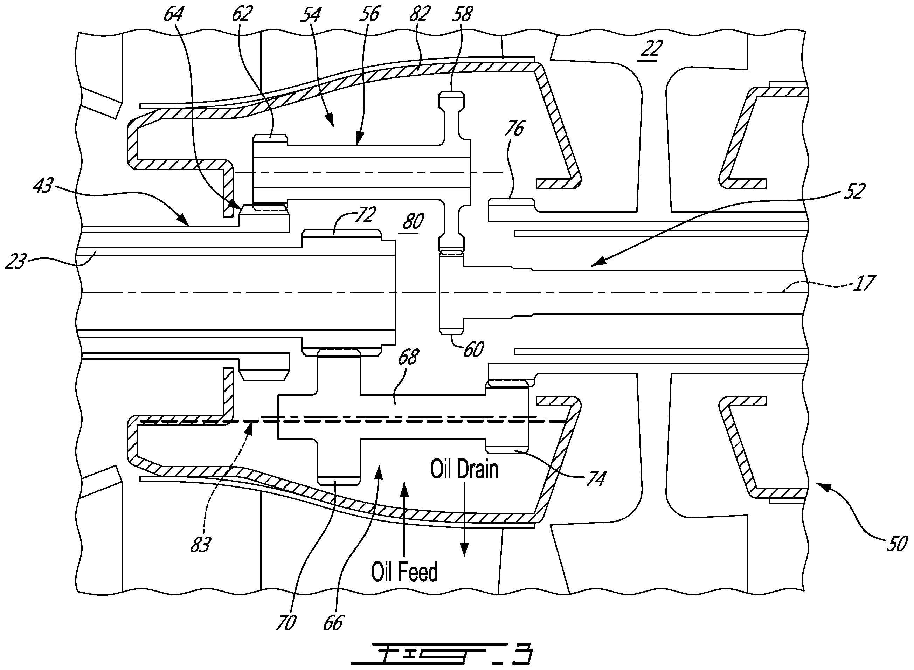

The inner gaspath wall 82 in addition to forming a flow boundary surface for the gaspath 18, thus, also acts as a casing for housing the first and second gear trains 54, 66 and to provide support thereto. In addition to housing and supporting the gear trains 54, 66, the inner gaspath wall 82 also provides a sump to contain the oil required to lubricate the gears. Broken line 83 in Fig. 3 is representative of the oil level that may be contained in the sump. The oil feed and return lines may be passed through a hollow strut or vane extending radially through the gaspath, as depicted by flow arrows in Fig. 3.

The central cavity 80 may be formed by the gas generator case and the inlet case of the engine 10. In this way access to the gear trains 54, 66 may be readily provided by removing the inlet case from the engine 10.

As shown in Fig. 4, the central cavity 80 housing the gear trains 54, 66 is fluidly connected to AGB 50. Oil from the cavity 80 can flow into the oil chamber of the AGB and vice versa. That is the oil reservoir of both modules (1- the first and second gear trains and 2- the AGB) on opposed sides of the LP compressor are combined using their own individual sump capacity. The oil from both modules can travel axially centrally through the LP compressor 22 and be collected in the sump of the other module.

It is understood that the first and second gear trains 54, 66 could adopt various configurations. The configuration illustrated in Figs. 1 and 2 is given for illustrative purposes only. For instance, the output of the first and second gear trains could be asymmetric relative to the rotation axis of the LP and HP spools. In the illustrated embodiment, the output of the first and second gear trains is concentric to the axis 17.

It can thus be appreciated that at least some of the embodiments of the engine 10 disclosed herein provide a mechanical architecture of turbomachinery that allows for a split compressor system in a compact PT6 type configuration. Such a split compressor engine in a reverse flow or through flow configuration may be used for aircraft nose installations, as well as for wing installations. The gear trains 54, 66 eliminate the need for a tower shaft an externally mounted gear train for connecting the AGB 50 to the HP spool 40. In this way not shaft has to be passed across the gaspath to drivingly connect the HP spool to the AGB, thereby avoiding performances losses. The compressor aerodynamics can be improved by eliminating the service strut typically used to pass the tower shaft. The engine weight may be reduced by eliminating the need of an upstream transfer case. The position of the hardware used to build the gear trains may be designed for an optimal clearance from the LP rotor center.

The above description is meant to be exemplary only, and one skilled in the art will recognize that changes may be made to the embodiments described without departing from the scope of the invention as defined by the appended claims.

## Claims

1. A reverse flow gas turbine engine (10), comprising:
an output drive shaft (16) having a front end configurable to drivingly engage a rotatable load;
a low pressure (LP) spool (20) including an LP turbine (21) drivingly engaged to the output drive shaft (16), and an LP compressor (22) drivingly connected to the LP turbine (21) via a gear train (66), the LP turbine (21) disposed forward of the LP compressor (22) relative to a front end of the output drive shaft (16);
a high pressure HP spool (40) including an HP turbine (41) and an HP compressor (42) drivingly engaged to an HP shaft (43) rotatable independently of the LP spool (20), the HP compressor (42) disposed forward of the LP compressor (22) and in fluid communication therewith via a gaspath (18), and the HP turbine (41) disposed aft of the LP turbine (21) and in fluid communication therewith through said gaspath (18), wherein the gear train (66) coupling the LP compressor (22) to the LP turbine (21) is disposed between the LP compressor (22) and the HP compressor (42) and radially inwardly from the gaspath (18); and
an accessory gearbox (AGB) (50), the AGB (50) being mounted aft of the LP compressor (22), wherein the AGB (50) has an input shaft (52) extending through a central bore of the LP compressor (22), the input shaft (52) being drivingly connected to the HP spool (40) via a further gear train (54) .

2. The reverse flow gas turbine engine (10) defined in claim 1, wherein the gear train (66) and the further gear train (54) are housed in a same chamber (80) circumscribed by an inner gaspath wall (82) of the gaspath (18), and the chamber (80) in which are disposed the gear train (66) and the further gear train (54) is in fluid flow communication with an oil chamber of the AGB (50) axially through the center of the LP compressor (22).

## Patentansprüche

1. Gegenstrom-Gasturbinenmotor (10), umfassend:
eine Ausgangsantriebswelle (16) mit einem vorderen Ende, das so konfiguriert werden kann, dass es antriebsmäßig mit einer drehbaren Last in Eingriff kommt;
eine Niederdruck-(ND)-Spule (20), die eine ND-Turbine (21), die antriebsmäßig mit der Ausgangsantriebswelle (16) in Eingriff steht, und einen ND-Kompressor (22), der antriebsmäßig mit der ND-Turbine (21) über einen Getriebezug (66) verbunden ist, umfasst, wobei die ND-Turbine (21) relativ zu einem vorderen Ende der Ausgangsantriebswelle (16) vor dem ND-Kompressor (22) angeordnet ist;
eine Hochdruck-HD-Spule (40), die eine HD-Turbine (41) und einen HD-Kompressor (42), der antriebsmäßig mit einer HD-Welle (43) verbunden ist, die unabhängig von der ND-Spule (20) drehbar ist, umfasst, wobei der HD-Kompressor (42) vor dem ND-Kompressor (22) angeordnet ist und mit diesem über einen Gasweg (18) in Fluidverbindung steht, und die HD-Turbine (41) hinter der ND-Turbine (21) angeordnet ist und mit dieser über den Gasweg (18) in Fluidverbindung steht, wobei der Getriebezug (66), der den ND-Kompressor (22) mit der ND-Turbine (21) koppelt, zwischen dem ND-Kompressor (22) und dem HD-Kompressor (42) und radial einwärts vom Gasweg (18) angeordnet ist; und
ein Zusatzgetriebe (ZG) (50), wobei das ZG (50) hinter dem ND-Kompressor (22) angebracht ist, wobei das ZG (50) eine Eingangswelle (52) aufweist, die sich durch eine zentrale Bohrung des ND-Kompressors (22) erstreckt, wobei die Eingangswelle (52) über einen weiteren Getriebezug (54) antriebsmäßig mit der HD-Spule (40) verbunden ist.

2. Gegenstrom-Gasturbinenmotor (10) nach Anspruch 1, wobei der Getriebezug (66) und der weitere Getriebezug (54) in derselben Kammer (80) aufgenommen sind, die von einer inneren Gaswegwand (82) des Gaswegs (18) umschrieben ist, und die Kammer (80), in der der Getriebezug (66) und der weitere Getriebezug (54) angeordnet sind, in Fluidströmungsverbindung mit einer Ölkammer des ZG (50) axial durch die Mitte des ND-Kompressors (22) steht.

## Revendications

1. Moteur à turbine à gaz à flux inversé (10), comprenant :
un arbre d'entraînement de sortie (16) ayant une extrémité avant configurable pour venir en prise par entraînement avec une charge rotative ;
un corps basse pression (BP) (20) comportant une turbine BP (21) en prise par entraînement avec l'arbre d'entraînement de sortie (16), et un compresseur BP (22) connecté par entraînement à la turbine BP (21) via un train d'engrenages (66), la turbine BP (21) étant disposée en avant du compresseur BP (22) par rapport à une extrémité avant de l'arbre d'entraînement de sortie (16) ;
un corps haute pression HP (40) comportant une turbine HP (41) et un compresseur HP (42) en prise par entraînement avec un arbre HP (43) pouvant tourner indépendamment du corps BP (20), le compresseur HP (42) étant disposé en avant du compresseur BP (22) et en communication fluidique avec celui-ci via un trajet de gaz (18), et la turbine HP (41) étant disposée à l'arrière de la turbine BP (21) et en communication fluidique avec celle-ci via ledit trajet de gaz (18), dans lequel le train d'engrenages (66) couplant le compresseur BP (22) à la turbine BP (21) est disposé entre le compresseur BP (22) et le compresseur HP (42) et radialement vers l'intérieur depuis le trajet de gaz (18) ; et
une boîtier d'entraînement des accessoires (AGB) (50), l'AGB (50) étant monté à l'arrière du compresseur BP (22), dans lequel l'AGB (50) a un arbre d'entrée (52) s'étendant à travers un alésage central du compresseur BP (22), l'arbre d'entrée (52) étant connecté par entraînement au corps HP (40) via un autre train d'engrenages (54).

2. Moteur à turbine à gaz à flux inversé (10) selon la revendication 1, dans lequel le train d'engrenages (66) et l'autre train d'engrenages (54) sont logés dans une même chambre (80) circonscrite par une paroi de trajet de gaz interne (82) du trajet de gaz (18), et la chambre (80) dans laquelle sont disposés le train d'engrenages (66) et l'autre train d'engrenages (54) est en communication fluidique avec une chambre à huile de l'AGB (50) axialement à travers le centre du compresseur BP (22).
